# EUROPEAN PATENT APPLICATION

(11) **EP 3 355 080 A1**
(43) Date of publication of application: **01.08.2018**
(21) Application number: 18154135.0
(22) Date of filing: 30.01.2018
(51) Int. Cl.: G01S 19/17, G08B 25/01

(54) **PORTABLE PERSONAL SAFETY DEVICE HAVING A DATA COLLECTION APPARATUS**

(30) Priority: 31.01.2017 TR 201701473
(71) Applicant: Yeditepe Universitesi, 34755 Istanbul (TR)
(72) Inventor: TOPALOGLU, Serkan, Istambul (TR); ILHAN, Ahmet, Istambul (TR)
(74) Representative: Dericioglu Kurt, Ekin

(57) **Abstract**

The present invention is a portable personal safety device comprising a portable housing (10) and a trigger member (24) positioned on the housing such that it is accessible from outside. The personal safety device comprises a processor (30) provided within the housing (10), a memory module (32) associated with the processor (30) so as to provide data transmission, a wireless communication module (34), a GPS module (36) and a camera (44) that is adjusted to capture images from outside; and it is configured such that the processor (30) stores in the memory module (32) a crime scene data, which it obtains by collecting images from the camera (44) and position information from the GPS module (36) when the trigger (24) is activated to allow switching to an emergency mode and transmits the crime scene data in the memory module (32) to a remote server (5) over the internet (1) in case the wireless communication module (34) detects connection status by checking the active connection signal.

## Description

### Field of the Invention

The present invention relates to portable devices used for personal safety and self-defense in situations such as assault and harassment, in particular to a multifunctional portable personal safety device comprising a data collection apparatus collecting various audio and visual information about the event.

### Background of the Invention

Today, various abuses towards people are increasing day by day. The facts that people are being exploited and abused by others and are being the target of unwanted sexual acts of others are the adverse outcomes of this tendency. People of any gender, social group and profession can be subject to abuse. In general, however, it can be said that women and children are more exposed to sexual abuse. Abuse may be explicit or implicit.

Abuse may take place verbally, by touching and acts/behaviors. The fact that it is an abuse that can be encountered at any place and position shows the difficulty of taking measures against sexual abuse in particular. Great difficulties are experienced in being able to resist, fight against and prevent these abuses.

Such abuses are prevented by the security forces. However, the law enforcement officers at the crime scene cannot always attain rapid and precise results both in terms of taking measures and preventing the assaults. This in turn causes people to seek ways of self-defense and protection.

Different methods have been tried for personal protection. Pepper spray is one of them. In addition, it is possible to encounter different applications in the art. The patent document no. TR 201612773 discloses a bracelet for use in ensuring personal protection and individual safety, which can be worn comfortably on the wrist and used in daily life by the user, and which contains compressed air capsules and liquid capsules and enables to provide a pepper spray and a high decibel sound by means of the spraying provided by the compressed air.

The patent document no. TR 201601321 relates to a portable personal safety and monitoring system and device developed for wireless personal safety (protection) and monitoring reporting. The personal safety and monitoring system developed by the said invention and the device according to this system are comprised of three main parts, namely a material dispenser, a liquid material module housing a liquid material (tear gas or pepper gas), and a housing containing the liquid material module and an RFID sensor.

The United States patent document no. US2015253101 discloses a portable personal protection device using compressed gas. The United States patent document no. US5429301 discloses a personal protection device which appears like a telephone pager and which, upon spraying of the chemical gas therein, can also activate a high decibel alarm.

### Summary of the Invention

The object of the present invention is to enable the victim to collect data from the crime scene by the portable personal safety device and to report the said data to the central units.

To achieve the above-mentioned object, the invention is a portable personal safety device comprising a portable housing and a trigger member positioned on the housing such that it is accessible externally. The personal safety device comprises a processor provided within the housing, a memory module associated with the processor so as to provide data transmission, a wireless communication module, e.g., a GSM (GPRS) module, a GPS module and a camera that is adjusted to capture images from outside; and it is configured to store in the memory module a crime scene data, which is obtained by collecting images from the camera and position information from the GPS module when the trigger is activated to allow the processor to switch to an emergency mode and to transmit the crime scene data in the memory module to a remote server via the Internet in case the wireless communication module detects connection status by checking the active connection signal. Thus, it is possible for the user to obtain images and position information from the crime scene in case of emergency by means of the safety device. If the device has a wireless communication connection, the obtained information is instantly transmitted to a remote server, such as the servers of the security forces or a private security company, and the crime scene data is remotely accessed and thus it is possible to properly intervene in the crime scene as soon as possible.

In a preferred embodiment of the invention, the housing comprises a container storing an incapacitating agent which is sprayed via a nozzle that is activated by the trigger member and opens out from the housing. An incapacitating chemical such as tear gas or pepper spray is sprayed from the container to the attacker to temporarily incapacitate him/her. In an alternative embodiment, an electric shock device is stored in the container within the housing, and instead of spraying a gas via the nozzle, the end of the device that provides electric conduction can be thrown to the attacker.

In a preferred embodiment of the invention, the trigger member is set to trigger two binary sequences, which first open the nozzle in emergency mode and then activate the processor to collect crime scene data. By this means, first of all the attacker is incapacitated and then an image of him/her which can be used for identification is taken and/or crime scene location information is provided.

In a preferred embodiment of the invention, the housing comprises a microphone which is associated with the processor so as to provide data transmission and which is adjusted to generate audio data that will be sent to the memory module to be incorporated into the crime scene data. Thus, the audio information is provided as part of the crime scene data so that it can be used in conjunction with the detection of a crime in subsequent analyses.

A preferred embodiment of the invention comprises a flash provided on the housing in an outwardly facing manner and associated with the processor so as to provide data transmission. The flash provides additional light for the camera to capture images of the scene. In an alternative embodiment, the flash light is configured at a light intensity that can temporarily block the attacker's eyesight.

A preferred embodiment of the invention comprises a photodetector, which is provided on the housing such that it receives light from outside and is associated with the processor to provide data transmission; and the photodetector is configured so that the processor automatically activates the flash according to the light intensity information coming from the photodetector.

In a preferred embodiment of the invention, the processor is configured in such a manner that when the trigger member is activated, it processes the image information in video or photograph capture mode depending on the predetermined configuration via the camera and sends it to the memory module as crime scene data. The adjustment for taking a photo shot, sequential photo shoot or video shot and combinations thereof can be made during the initial setup of the camera or can be recorded in the memory module during initial production.

A preferred embodiment of the invention comprises a siren provided on the housing and the processor is configured to activate the siren in emergency mode. The siren generates a high-decibel audio signal in emergency mode, thereby attracting the attention of the nearby security forces and/or other people to the crime scene due to the audible warning and also temporarily blocking the attacker aurally. A preferred embodiment of the invention comprises a battery fixed in the housing so as to supply electric current to the processor. The battery eliminates dependence on an electricity source, enabling the housing to fulfill its function for a long time in a portable manner.

In a preferred embodiment of the invention, the processor is configured to collect a first position information from the GPS module when the battery is activated and to collect a second position information when the trigger member is pressed in the emergency mode and to transmit both information so as to store both of the information in the memory module.

In a preferred embodiment of the invention, the trigger member comprises a pushbutton or is adjusted to be operated with a voice command. In the case that it works with a voice command, the microphone serves for audio surveillance and when a predetermined word is pronounced the emergency mode is activated. While this word can be a word selected by the user and recorded in the memory module in advance, it can also be loaded in the memory module at the initial setup of the device. The processor switches to emergency mode when it detects a voice command that matches the word recorded in the memory module by performing voice analysis. Alternatively, it is also possible to control different functions of the device with voice.

The invention is a method of operation for the above described portable personal safety device in order to achieve the above mentioned object, and comprises the steps of activating the trigger member to define an emergency mode; spraying an incapacitating agent stored in a container through the nozzle; the processor collecting the crime scene data comprised of the images from the camera and the position information from the GPS module and storing them in the memory module; and the processor transmitting the crime scene data to a remote server when the wireless communication module detects presence of active connection signal. In a possible embodiment, a plurality of wireless communication modules is provided which will back up each other. For example the wireless communication module may comprise a GSM line and a Bluetooth module. If a problem is experienced with the connection in the GSM module, the Bluetooth module will be switched on and it will communicate with a nearby matched mobile device having internet connection and transmit the crime scene data to the remote server via this channel.

### Description of the Figures

A personal safety device developed to fulfill the objects of the present invention is illustrated in the accompanying figure, in which:

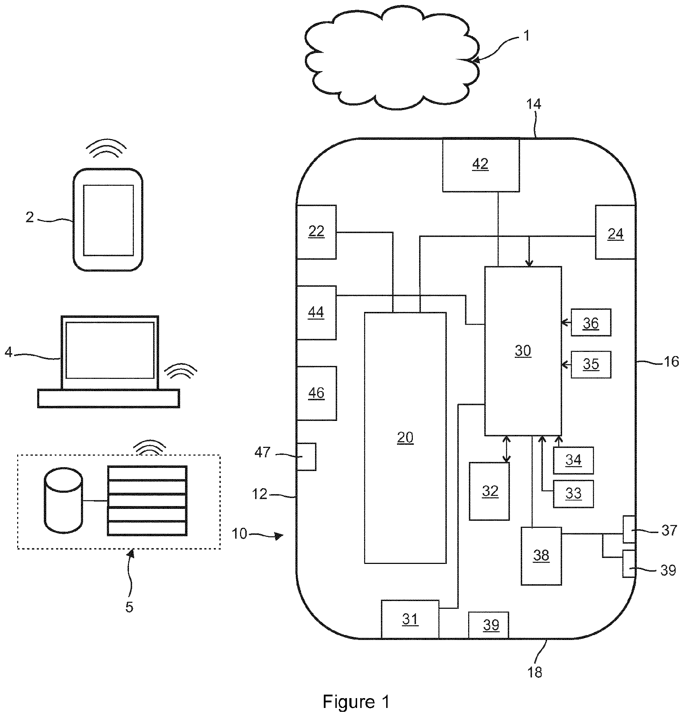

Figure 1 is a schematic view of the module and data transmission paths of a representative configuration of the portable personal safety device of the present invention.

### Reference Numbers

The components in the figures are given reference numbers as follows:

| | |
|---|---|
| 1 Internet | 30 Processor |
| 2 Mobile terminal | 31 Siren |
| 4 Computer | 32 Memory module |
| 5 Server | 33 Short range communication module |
| 10 Housing | 34 Wireless communication module |
| 12 First lateral part | 35 Data transmission port |
| 14 Upper part | 36 GPS module |
| 16 Second lateral part | 37 Charging port |
| 18 Lower part | 38 Battery |
| 20 Container | 39 Indicator |
| 22 Nozzle | 40 Data collection apparatus |
| 24 Trigger member | 42 Microphone |
| | 44 Camera |
| | 46 Flash |
| | 47 Photodetector |

### Detailed Description of the Invention

Figure 1 shows a schematic view of a representative configuration of the portable personal safety device of the present invention. A plurality of modules is arranged on a circuit board in a housing (10), which is in the form of a hollow box, such that they transmit electric signal to each other. A central processor (30) unit is coupled to a memory module (32) such that a bi-directional data transmission is provided therebetween. In addition, a short-range communication module (33), a wireless communication module (34) and a GPS module (36) enable the processor (30) to realize data transmission over the internet (1) or the local network. A Liion battery (38) in the housing (10) provides voltage to the processor (30). A charging port (37) provides electric power transmission from the housing (10) to the battery (38) so as to charge the battery (38). An indicator (39), which is electrically connected to the battery (38) and the charging port (37), enables the state of the charge of the battery (38) to be visually accessible on the housing (10). A data collection apparatus (40) is connected to the processor (30) so as to allow transmission of electric signals therebetween. The data collection apparatus (40) comprises a microphone (42), a camera (44) and a flash (46), and a photodetector (47). A container (20) is fixed in the housing (10) spaced apart from the electronic components so as to leave a safety distance. The container (20), providing fluid communication, controllably delivers a compressed incapacitating agent (e.g. pepper gas) contained therein to a nozzle (22), which opens out of the housing (10). A trigger member (24) is adjusted to deliver the incapacitating agent in the container (20) to the nozzle (22) when pressed. The trigger member (24) is configured as a push button. The microphone (42) is mounted on an upper part (14) on the housing (10). The opposing lower part (18) is mounted so that the siren (31) and the data transmission port (35) are functionally accessible from the outside. In a first lateral part (12); the nozzle (22), the camera (44) and the photodetector (47) are arranged so that they are accessible from the outside. In the second lateral part opposite thereto, the trigger member (24), the charging port (37) and the indicator (39) are arranged to be functionally accessible from the outside.

In an embodiment of the portable personal safety device, the processor (30) is in communication with the wireless communication module (34) to provide data transmission to a server (5) over the internet (1). The processor (30), to which the battery (38) supplies electric current, is configured to enable minimum energy consumption in a rest mode. The GPS module (36) detects the first position of the device and records the coordinate information into the memory module (32) by the help of the processor. A timer module of the processor (30) enables the GPS module (36) to be periodically activated and writes the periodically obtained position information into the memory module (32). In the event of an emergency, that is, when the user needs to use the portable personal safety device against an attacker, the user aligns the nozzle (22) to the attacker and presses the trigger member (24). In this case, the incapacitating gas or liquid (e.g., pepper gas, paint, tear gas) passes from the container (20) to the nozzle (22) and is sprayed out through the nozzle (22). At the same time, the trigger member (24) sends a signal that will activate the processor (30) enabling switching to the emergency mode. In the emergency mode, the processor (30) activates the data collection apparatus (40) as it is preprogrammed. Thus, the microphone (42) and the camera (44) record and the processor (30) respectively records the audio and visual data into the memory module (32) as the crime scene data. During recording of the camera (44), the photodetector (47) detects the ambient light intensity, and, if it is above a predetermined threshold value, keeps the flash (46) off, while, on the contrary, if it is below the threshold value, activates the flash (46). In addition, the processor (30) activates the siren (31) to generate an emergency signal at a high intensity decibel value for the human ear. The processor (30) checks the short-range communication module (33) and the wireless communication module (34) in terms of their connection statuses. If the wireless communication module (34) is directly connected to the internet (1), it transmits the crime scene data in the memory module (32) to the server (5) located at a predetermined address over the internet (1). The crime scene data is in the form of a report which includes position monitoring and information pertaining to the distance traveled between the first and last moments as well as the sounds, images and crime scene position coordinates. The server (5) may be at a location belonging to a private security company or official security authorities. The security units and the victim's relatives will promptly intervene to ensure safety of the life and property of the victim. If the processor (30) detects that the wireless communication module (34) does not have any connection, it checks the short range communication module (33) in terms of active connection. If the short range communication module (33) is connected to a mobile terminal (2), e.g. a mobile phone with an internet connection, serving as a proxy server so as to provide data transmission; it transfers the information stored in the memory module (32) to the internet (1) via the mobile terminal (2) and transmits it to the server (5) in the form of a report. The device is adjusted by the help of a computer (4) by means of accessing the processor (30) via a data transmission port (35) located on the lower part (18). The operations that will be carried out by the processor (30) are defined by the computer (4) connection (wired and / or wireless connection).

Accordingly; communication with the persons and / or units previously defined in the query screens provided on the interface (not shown) is provided by e-mail, MMS, SMS and / or various communication software or via a customized specific mutually communicating communication protocol. All information contained in the memory module (32) can also optionally be synchronized with a cloud storage unit on the internet (1). A mobile device, for example a mobile phone, is enabled to communicate with the device of the invention via a wireless connection by the help of the wireless communication module or directly via a cable connection, thereby enabling the device to be adjusted by the user by accessing and modifying the configuration file in the memory module (32).

It is possible to program the device by accessing the memory module (32) via the data transmission port (35) or the wireless communication module (34) and modifying the configuration file. A modular-replaceable battery (38), which can be charged with the help of the charging port (37) or in a wireless manner, is powered by an energy source. A led (single color or multi-color) or a led array showing the status of the battery (38) will be located on the indicator (39).

## Claims

1. A portable personal safety device comprising a portable housing (10) and a trigger member (24) positioned on the housing (10) such that it is accessible from outside; **characterized in that** it comprises a processor (30) provided within the housing (10), a memory module (32) associated with the processor (30) so as to provide data transmission, a wireless communication module (34), a GPS module (36) and a camera (44) that is adjusted to capture images from outside; and it is configured such that the processor (30) stores in the memory module (32) a crime scene data, which it obtains by collecting images from the camera (44) and position information from the GPS module (36) when the trigger (24) is activated to allow switching to an emergency mode and transmits the crime scene data in the memory module (32) to a remote server over the internet (1) in case the wireless communication module (34) detects connection status by checking the active connection signal.

2. A portable personal safety device according to Claim 1, **characterized in that** the housing (10) comprises a container (20) storing an incapacitating agent which is sprayed via a nozzle (22) that is activated by the trigger member (24) and opens out from the housing (10).

3. A portable personal safety device according to Claim 2, **characterized in that** the trigger member (24) is set to trigger at two binary sequences, which first open the nozzle (22) in emergency mode and then activate the processor (30) to collect the crime scene data.

4. A portable personal safety device according to any one of the preceding claims, **characterized in that** the housing (10) comprises a microphone (42) which is associated with the processor (30) so as to provide data transmission and which is adjusted to generate audio data that will be sent to the memory module (32) to be incorporated into the crime scene data.

5. A portable personal safety device according to any one of the preceding claims, **characterized in that** the housing (10) comprises a flash (46) which is provided on the housing (10) in an outwardly facing manner and associated with the processor (10) so as to provide data transmission.

6. A portable personal safety device according to Claim 5, **characterized in that** it comprises a photodetector (47), which is provided on the housing (10) such that it receives light from outside and is associated with the processor (30) to provide data transmission; and that the processor (30) is configured to automatically activate the flash (46) according to the light intensity information coming from the photodetector (47).

7. A portable personal safety device according to any one of the preceding claims, **characterized in that** the processor (30) is configured in such a manner that when the trigger member (24) is activated, it processes the image information in video or photograph capture mode depending on the predetermined configuration via the camera (44) and sends it to the memory module (32) as crime scene data.

8. A portable personal safety device according to any one of the preceding claims, **characterized in that** it comprises a siren (31) provided on the housing (10) and that the processor (30) is configured to activate the siren (31) in emergency mode.

9. A portable personal safety device according to any one of the preceding claims, **characterized in that** it comprises a battery (38) which is fixed in the housing (10) so as to supply electric current to the processor (30).

10. A portable personal safety device according to Claim 9, **characterized in that** the processor (30) is configured to collect a first position information from the GPS module (36) when the battery (38) is activated and to collect a second position information when the trigger member (24) is pressed in the emergency mode and to transmit both information so as to store them in the memory module (32).

11. A portable personal safety device according to any one of the preceding claims, **characterized in that** the trigger member (24) comprises a pushbutton or is adjusted to be operated with a voice command.

12. A method of operation for the portable personal safety device according to any one of the preceding claims, **characterized in that** it comprises the steps of activating the trigger member (24) to define an emergency mode; spraying an incapacitating agent stored in a container (20) through the nozzle (22); the processor (30) collecting the crime scene data comprised of the images from the camera (44) and the position information from the GPS module (36) and storing them in the memory module (32); and the processor (30) transmitting the crime scene data to a remote server (5) when the wireless communication module (34) detects presence of active connection signal.
